# EUROPÄISCHE PATENTSCHRIFT

(11) **EP 3 576 939 B1**
(45) Veröffentlichungstag und Bekanntmachung des Hinweises auf die Patenterteilung: **20.07.2022**
(21) Anmeldenummer: 18706419.1
(22) Anmeldetag: 02.02.2018
(51) Int. Cl.: B32B 5/02, B32B 7/12, B32B 27/12, B32B 27/26, B32B 27/34, B32B 27/40, B29C 65/02

(54) **VERBUND ZUR HERSTELLUNG VON FILMLOSEN LAMINATEN**
COMPOSITE FOR PRODUCING FILMLESS LAMINATES
COMPOSITE POUR FABRIQUER DES STRATIFIÉS SANS FILM

(30) Priorität: 03.02.2017 DE 102017102158
(43) Veröffentlichungstag der Anmeldung: 11.12.2019
(73) Patentinhaber: Dimension-Polyant GmbH, 47906 Kempen (DE)
(72) Erfinder: SCHILLINGS, Heiner, 52525 Heinsberg (DE)
(74) Vertreter: Schneiders & Behrendt Bochum
(86) Internationale Anmeldenummer: PCT/EP2018/052637
(87) Internationale Veröffentlichungsnummer: WO 2018/141899

(56) Entgegenhaltungen:
- WO-A1-01/89831
- US-A1- 2011 281 100

## Beschreibung

Die Erfindung betrifft einen Verbund zur Herstellung von filmlosen Laminaten mit einer thermoplastischen Kunststofffolie und einer textilen Lage. Die thermoplastische Kunststofffolie dient als Träger und enthält darin dispergiert einen thermisch aktivierbaren Vernetzer. Die textile Lage ist mit der thermoplastischen Kunststofffolie durch thermische Behandlung adhäsiv verbunden. Insbesondere ist der Verbund für die Herstellung von filmlosen Laminaten für den Segelsport geeignet.

Kunststofffilme werden vielfach verwandt, um die Eigenschaften von Flächengebilden zu verbessern. Sie erhöhen beispielsweise die Bruch- und Reißfestigkeit, verhindern die Fortpflanzung von Rissen, erhöhen die Schlagzähigkeit und verbessern das Erscheinungsbild.

Verstärkungsfasern werden in Verpackungsmaterialien und technischen Produkten eingesetzt, um die Zugfestigkeit, Schlagzähigkeit, Steifheit und Verarbeitungskompatibilität zu erhöhen. In Kombination mit Kunststofffilmen ergeben sich Verbesserungen, die aus der Kombination der Eigenschaften beider Materialien herrühren. Ein Verbund aus Kunststofffilmen und Verstärkungsfasern hat sich im Segelsport bewährt.

Insbesondere bei der Fertigung von Hochleistungssegeln steht die Vereinigung einer Reihe von besonderen Eigenschaften im Vordergrund, als da sind niedriges Gewicht, gute Handhabbarkeit, geringe Winddurchlässigkeit, hohe Reißfestigkeit, Elastizität und dergleichen. Ziel eines jeden Segeltuchherstellers ist die Optimierung dieser Eigenschaften in nur einer Membran für die Segelherstellung.

Zur Herstellung von Laminaten für den Segelsport werden heute Kunststofffilme, die mit thermoplastischen Klebstoffen oder 2K-Klebstoffen beschichtet sind, eingesetzt. In das Klebstoffbett werden Verstärkungsgarne auf unterschiedliche Art eingebracht und anschließend unter Wärmeeinwirkung miteinander verklebt. Je nach Einsatzzweck befindet sich auf der dem Klebebett gegenüberliegenden Seite eine aufkaschierte textile Lage, die zum Schutz des Films und des Laminats dient. Ein weithin üblicher Aufbau besteht daher in der Abfolge äußere Lage/Klebstoff/Film/Klebstoff/Verstärkung/Klebstoff/Film/Klebstoff/äußere Lage.

Thermoplastische Kunststofffolien zur Herstellung von Laminaten sind bekannt. So beschreibt die WO 01/89831 A1 ein Verfahren zur Herstellung von mehrschichtigen Dokumentenkarten und danach hergestellte Dokumentenkarten, bei denen mit einem Vernetzer ausgerüstete Kunststofffolien zum Verkleben von Schichten eingesetzt werden. Der Vernetzer wird durch Druck und/oder Temperatur aktiviert und bewirkt unter Vernetzung des Kunststoffs die Verklebung der einzelnen Schichten. Das Verfahren wird zur Herstellung von Ausweis- und Bankkarten eingesetzt.

Die US 2011/0281100 A1 beschreibt ein wasserfestes Laminat, bei dem ein Gewebe mit einer Kunststofffolie thermisch verklebt und hydrophob beschichtet ist.

Aufgabe der Erfindung ist die Bereitstellung eines Mittels, mit dem mehrschichtiges Laminat einfach und effizient hergestellt werden kann. Insbesondere soll die bisher praktizierte Art und Weise des Verklebens der einzelnen Komponenten in einer Fertigungsstraße durch Fortfall der Kunststofffilme vereinfacht werden.

Diese Aufgabe wird mit einem Verbund der eingangs genannten Art erreicht, in dem die thermoplastische Kunststofffolie und die textile Lage durch Wärmeeinwirkung bei einer ersten Temperatur, die den Vernetzer nicht aktiviert, adhäsiv miteinander verbunden sind, wobei der Verbund durch Wärmeeinwirkung bei einer zweiten Temperatur, die höher ist als die erste Temperatur mit einem Substrat verklebbar ist.

Der erfindungsgemäße Verbund weist eine thermoplastische Kunststofffolie als Klebefolie und Trägerfolie auf, die darin dispergiert einen thermisch aktivierbaren Vernetzer enthält. Diese Kunststofffolie ist mit der textilen Lage adhäsiv verbunden, d.h. verklebt. Diese Verklebung wird durch Wärmeeinwirkung bei einer ersten Temperatur erreicht, die zur Erweichung der Folie führt und einen Klebeeffekt herbeiführt, ohne dass die Folie dabei ihre thermoplastischen Eigenschaften verliert. Nach Fixierung der textilen Lage und Abkühlen der Folie zeigt diese keine Klebewirkung mehr und ist unbegrenzt lagerfähig. Insbesondere behält die Folie ihre Flexibilität und ihre thermoplastischen Eigenschaften. Dies ermöglicht eine weitere Beschichtung unter gleichen Bedingungen.

Der erfindungsgemäße Verbund kann weitere Schichten aufweisen, etwa eine Beschichtung, die Additive zur Verbesserung der Eigenschaften des Endproduktes enthält, beispielsweise UV-Absorber, Pigmente oder dergleichen, allgemein als stabilisierende Additive bezeichnet.

Durch den in der thermoplastischen Kunststofffolie dispergiert enthaltenen Vernetzer, der eine Aktivierungstemperatur (zweite Temperatur) aufweist und bei dieser Temperatur thermisch aktiviert wird, kann der erfindungsgemäße Verbund durch Erhitzen auf diese zweite Temperatur erneut verklebt werden, wobei durch die Aktivierung des Vernetzers die Folie duroplastische Eigenschaften erhält.

Nach der Verklebung mit dem Substrat erfüllt die thermoplastische Kunststofffolie die Funktion des Kleberbetts, in dem üblicherweise die textile Lage verlegt wird. Insoweit kann man die Laminate als "filmlos" bezeichnen. Im Vergleich zum Kleberbett hat die thermoplastische Kunststofffolie in der Regel ein niedriges Flächengewicht.

Der mit einem Substrat erhaltene Verbund ist ein Laminat, das die Eigenschaften des Substrats und des Verbundes miteinander vereint. Als Substrat dienen insbesondere textile Flächengebilde, die mit dem erfindungsgemäßen Verbund zu Segeltuch verbunden werden. Es können aber auch zwei Lagen des erfindungsgemäßen Verbundes und innenliegenden Verstärkungsmaterial zu einem Laminat verklebt werden. In diesem Fall besteht der Aufbau in der Abfolge äußere Lage/Klebstoff /Verstärkung/Klebstoff/äußere Lage.

Ein Vorteil der Vernetzung ist auch die feste Einbindung und Fixierung von beispielsweise Verstärkungsfasern in den Verbund, die die Tendenz zum Verrutschen der Faserverstärkung stark herabsetzt.

Unter Substrat werden Flächengebilde und Oberflächen verstanden, die mit dem erfindungsgemäßen Verbund verbindbar sind, beispielsweise zu Segeltuch. Der erfindungsgemäße Verbund kann aber auch für beliebige andere Zwecke eingesetzt werden, beispielsweise für Planen, die eine hohe Reißfestigkeit aufweisen müssen, für Verpackungsfolien, für Dachfolien und Schutzhüllen.

Geeignete Kunststofffolien, die darin dispergiert einen thermisch aktivierbaren Vernetzer enthalten, sind beispielsweise in der WO 01/89831 A1 beschrieben. Bevorzugte Kunststofffolien sind solche, die aus thermoplastischen Kunststoffen mit Doppelbindungen erhältlich sind, wenigstens eine Doppelbindung zurückbehalten und ein Peroxid als Vernetzerkomponente enthalten. Besonders bevorzugte Kunststoffe sind ungesättigte Polyamide und Polyurethane. Ungesättigte Polyester kommen ebenfalls in Frage.

Die erste Temperatur, bei der die Klebwirkung der Kunststofffolie einsetzt, beträgt vorzugsweise weniger als 80°C und liegt insbesondere bei 60 bis 70°C. Bei dieser Temperatur behält der Kunststoff seine thermoplastischen Eigenschaften, ist aber in der Lage, darauf aufgebrachte Lagen aus textilem Material adhäsiv festzuhalten. Nach Rückkehr auf Raumtemperatur ist der Verbund praktisch klebfrei und kann wie eine normale Kunststofffolie weiter verarbeitet werden.

Bei der zweiten Aktivierungstemperatur, die oberhalb 80°C liegt und vorzugsweise bei 110 bis 130°C liegt, wird der Vernetzer aktiviert und vernetzt den Kunststoff zu einem Duroplasten. Befindet sich der Verbund bei dieser Temperatur auf einem Substrat oder im inneren zweier Schichten oder auf einer weiteren Lage des Verbundes, tritt eine irreversible Verklebung ein, die auch zu einer festeren Einbindung der Verstärkungsfasern führt. Ein auf diese Art und Weise erzeugtes Laminat ist nur noch schwer zu delaminieren und bekommt zusätzlich durch die Umwandlung der Kunststofffolie zum Duroplasten eine höhere Steifigkeit.

Als Vernetzer kommen insbesondere die in der WO 01/89831 A1 genannten in Frage, beispielsweise die Folgenden mit der in Klammern angegebenen Aktivierungstemperatur:
Methylethylketonperoxid (~ 80°C)
Dibenzoylperoxid (~ 100°C)
Di(tert.-Butyl)peroxid (~ 150°C)
tert.-Butylperoxybenzoat (~ 130°C).

Gemäß einer weiteren Variante enthält die thermoplastische Kunststofffolie neben einer reaktiven Wasserstoff enthaltenden thermoplastischen Harzkomponente eine damit reaktive Polyisocyanatkomponente. In dieser Variante nutzt die thermoplastische Kunststofffolie die Reaktivität der Isocyanatkomponente zur Vernetzung der Klebstoffschicht bei der zweiten Temperatur. Bei Aktivierung des Systems stehen die Isocyanatgruppen der Polyisocyanatkomponente als Reaktionspartner für die Vernetzung zur Verfügung. Insbesondere sind dies Hydroxylgruppen und Aminogruppen der Harzkomponente. Die Reaktion zwischen den beiden Komponenten erfolgt allerdings noch nicht bei Raumtemperatur sondern erst oberhalb der Aktivierungstemperatur, die während der Applikation des Verbunds auf ein Substrat erreicht wird.

Als Polyisocyanatkomponenten kommen übliche in Frage, insbesondere solche auf Basis von Hexamethylendiisocyanat, Toluylendiisocyanat und Diphenylmethandiisocyanat.

Das Polyisocyanat kann dabei als Monomer vorliegen oder als Prepolymer, d.h. teilvernetzt mit einem üblichen Vernetzungsmittel. Um eine vorzeitige Reaktion des Klebstoffsystems bereits bei Raumtemperatur zu verhindern, ist es zweckmäßig, die Polyisocyanatkomponente entweder zu blockieren oder zu verkapseln. Bei der chemischen Blockierung mit üblichen Blockierungsmitteln wird das Blockierungsmittel oberhalb der Deblockierungstemperatur wieder abgespalten und damit die Reaktivität der Isocyanatgruppen wieder hergestellt. Durch die Wahl des Blockierungsmittels kann die Blockierungstemperatur eingestellt werden. Zudem lässt sich durch den Einsatz von Katalysatoren die Deblockierungstemperatur senken. Als Blockierungsmittel kommen beispielsweise in Frage:
Phenol (140 bis 180°C)
ε-Caprolactam (160 bis 180°C)
Butanonoxim (135 bis 155°C)
Malonsäureester (100 bis 130°C).

Eine weitere Möglichkeit zur Blockierung ist die Dimerisierung der Isocyanatgruppen zu Urethdion.

Im Falle der Mikroverkapselung wird die Verkapselung bei der Aktivierungstemperatur (zweite Temperatur) aufgehoben - das Polyisocyanat wird freigesetzt und reagiert mit der reaktiven Harzkomponente unter Vernetzung.

Als Harzkomponente und Reaktionspartner für die Polyisocyanate kommen insbesondere Formen von Polyolen und höhermolekularen thermoplastischen Polyaminen in Frage, beispielsweise Polyetherole, Polyesterole, OH-funktionelle Poly(meth)acrylate und -urethane oder NH₂-funktionelle Polyamide.

Die erfindungsgemäße zum Einsatz kommende thermoplastische Kunststofffolie hat in der Regel eine Stärke von 0,01 bis 0,07 mm, insbesondere von 0,025 bis 0,05 mm. Ihr Flächengewicht entspricht in etwa dem Flächengewicht eines herkömmlichen Kleberbetts, das zur Verklebung von Substraten mit Filmen und Verstärkungsfasern dient.

Eine textile Lage im Sinne der Erfindung kann ein Faservlies, ein Taft-Gewebe und/oder ein Gittergewebe aus Mono- oder Multifilamentgarnen sein.

Bevorzugt sind leichte Faservliese und Taft-Gewebe mit einem Flächengewicht von bis zu 50 g/m².

Zum Einsatz kommenden Verstärkungsfasern sind übliche Fasern, wie sie zumeist im Segelsport eingesetzt werden, beispielsweise Aramid-, Carbon-, Polyolefin- und/oder Polyesterfasern. Es ist ferner möglich, eine Faserverstärkung als Faservlies auf die thermoplasitische Kunststofffolie aufzubringen, wobei das Faservlies einen unidirektionalen Verlauf der Fasern oder einen multidirektionalen Verlauf aufweisen kann.

Die letztendlichen mechanischen Eigenschaften wie Reißfestigkeit, Kraft-Dehnungsverhalten, etc. werden durch die im Laminat verarbeiteten Verstärkungsmaterialien erzielt. Dies geschieht in den bekannten Art und Weisen wie Einbringen von Gittern (Scrims), Einbringen von sogenannten Insert-Garnen in Maschinenrichtung, Einbringen von sich in einem Winkel kreuzenden Verstärkungsfasern oder im Falle von sogenannten load-path Laminaten durch Verlegung der Verstärkungsfasern entlang der kalkulierten Lastlinien. Zum Einsatz kommenden Verstärkungsfasern sind übliche Fasern, wie sie zumeist im Segelsport eingesetzt werden, beispielsweise Aramid-, Carbon-, Polyolefin- und/oder Polyesterfasern.

Das Flächengewicht des erfindungsgemäßen Verbundes beträgt in der Regel 20 bis 100 g/m². Besonders bevorzugt ist ein Flächengewicht von 30 bis 50 g/m².

Der erfindungsgemäße Verbund ist einfach in großen Längen zu fertigen und kann beispielsweise als Rollenmaterial mit Breiten bis zu 2,0 m und Längen bis zu 1.000 m hergestellt werden. Das Rollenmaterial kann beliebig zugeschnitten werden und ist aufgrund der hohen Flexibilität des Verbundes auch auf gekrümmte Oberflächen anwendbar. Ebenso ist die Herstellung von Verstärkungsbändern denkbar. Um die Handhabung zu erleichtern und eine Verklebung bei der Lagerung bei erhöhter Raumtemperatur zu vermeiden kann es sinnvoll sein, den erfindungsgemäßen Verbund mit einer oder zwei Deckfolien (Transferfolien, release-Folien) auszustatten, die insbesondere bei Rollenmaterial für eine zuverlässige Trennung der Schichten führt und die Faserbewehrung vor Beschädigung schützt.

Die Herstellung des thermoplastischen Polyurethans mit darin integriertem Vernetzer ist bekannt. Beispielsweise sei auch die WO 01/89831 A verwiesen, die auf ungesättigte Polyurethane verweist, die mit Peroxiden vernetzt werden können.

## Patentansprüche

1. Verbund aus einer Klebefolie und einer textilen Lage zur Herstellung von filmlosen Laminaten mit
(a) einer thermoplastischen Kunststofffolie als Klebefolie
(b) einer mit der thermoplastischen Kunststofffolie adhäsiv verbundenen textilen Lage,
in dem die Kunststofffolie und die textile Lage durch Wärmeeinwirkung bei einer ersten Temperatur adhäsiv miteinander verbunden sind, **dadurch gekennzeichnet, dass** die Kunststofffolie darin dispergiert einen thermisch aktivierbaren Vernetzer enthält, der bei der ersten Temperatur nicht aktiviert wird, und der Verbund bei einer zweiten Temperatur, die höher ist als die erste Temperatur und den Vernetzer aktiviert, mit einem Substrat verbindbar ist.

2. Verbund nach Anspruch 1, **gekennzeichnet durch** eine erste Temperatur von ≤ 80°C und eine zweite Temperatur von > 80°C ist.

3. Verbund nach Anspruch 1 oder 2, **dadurch gekennzeichnet, dass** der thermoplastische Kunststoff der Klebefolie ein ungesättigtes Polyamid oder Polyurethan ist und der Vernetzer ein Peroxid mit einer Aktivierungstemperatur > 80°C.

4. Verbund nach Anspruch 3, **dadurch gekennzeichnet, dass** die thermoplastische Kunststofffolie eine Polyurethanfolie ist, die nach der Vernetzung duroplastische Eigenschaften erhält.

5. Verbund nach einem der vorstehenden Ansprüche, **dadurch gekennzeichnet, dass** die Kunststofffolie eine Stärke von 0,01 bis 0,07 mm, vorzugsweise 0,025 bis 0,05 mm aufweist.

6. Verbund nach einem der vorstehenden Ansprüche, **dadurch gekennzeichnet, dass** die textile Lage ein Taft-Gewebe oder ein Faservlies umfasst.

7. Verbund nach einem der vorstehenden Ansprüche, **dadurch gekennzeichnet, dass** die textile Lage Verstärkungsfasern enthält.

8. Verbund nach Anspruch 7, **dadurch gekennzeichnet, dass** die Verstärkungsfasern in zwei oder mehr Lagen paralleler Filamente angeordnet sind, wobei sich die Richtungen der Filamente kreuzen.

9. Verbund nach einem der Ansprüche 1 bis 8, **gekennzeichnet durch** eine adhäsiv gebundene Deckschicht.

10. Verbund nach Anspruch 9, **dadurch gekennzeichnet, dass** die Deckschicht stabilitätsfördernde Additive enthält.

11. Verbund nach einem der vorstehenden Ansprüche, **gekennzeichnet durch** ein Flächengewicht von 20 bis 100 g/m², vorzugsweise 30 bis 50 g/m².

12. Verbund nach einem der vorstehenden Ansprüche, **gekennzeichnet durch** wenigstens eine abziehbare Deckfolie.

13. Verbund nach einem der vorstehenden Ansprüche in Rollen- oder Bandform.

14. Verwendung eines Verbundes nach einem der vorstehenden Ansprüche zur Verstärkung von Folien und textilen Flächengebilden.

15. Verwendung des Verbundes nach einem der Ansprüche 1 bis 13 zur Herstellung von Segeltuch und Segeln.

## Claims

1. Composite formed of an adhesive film and a textile layer for the production of filmless laminates, comprising:
(a) a thermoplastic plastics film as adhesive film,
(b) a textile layer which is adhesively connected to the thermoplastic plastics film,
in which the plastics film and the textile layer are adhesively connected to one another by the effect of heat at a first temperature, **characterised in that** the plastics film contains, dispersed therein, a thermally activatable crosslinking agent, which is not activated at the first temperature, and the composite is connectable to a substrate at a second temperature which is higher than the first temperature and activates the crosslinking agent.

2. Composite according to claim 1, **characterised by** a first temperature of ≤80°C and a second temperature which is >80°C.

3. Composite according to claim 1 or 2, **characterised in that** the thermoplastic plastics material of the adhesive film is an unsaturated polyamide or polyurethane and the crosslinking agent is a peroxide having an activation temperature >80°C.

4. Composite according to claim 3, **characterised in that** the thermoplastic plastics film is a polyurethane film which, after the crosslinking, acquires thermosetting properties.

5. Composite according to one of the preceding claims, **characterised in that** the plastics film has a thickness of from 0.01 to 0.07 mm, preferably 0.025 to 0.05 mm.

6. Composite according to one of the preceding claims, **characterised in that** the textile layer comprises a taffeta fabric or a nonwoven fabric.

7. Composite according to one of the preceding claims, **characterised in that** the textile layer contains reinforcing fibres.

8. Composite according to claim 7, **characterised in that** the reinforcing fibres are arranged in two or more layers of parallel filaments, wherein the directions of the filaments intersect with each other.

9. Composite according to one of claims 1 to 8, **characterised by** an adhesively bonded covering layer.

10. Composite according to claim 9, **characterised in that** the covering layer contains stability-enhancing additives.

11. Composite according to one of the preceding claims, **characterised by** a weight per unit area of from 20 to 100 g/m².

12. Composite according to one of the preceding claims, **characterised by** at least one detachable covering film.

13. Composite according to one of the preceding claims in roll or strip form.

14. Use of a composite according to one of the preceding claims to reinforce films and textile fabrics.

15. Use of the composite according to one of claims 1 to 13 to produce sailcloths and sails.

## Revendications

1. Composite composé d'un film adhésif et d'une strate textile pour fabriquer des stratifiés sans film avec
(a) un film en matière synthétique thermoplastique en tant que film adhésif,
(b) une strate textile reliée de manière adhésive au film en matière synthétique thermoplastique,
dans lequel le film en matière synthétique et la strate textile sont reliés l'un à l'autre de manière adhésive sous l'effet de la chaleur à une première température, **caractérisé en ce que** le film en matière synthétique contient, dispersé dans celui-ci, un agent de réticulation pouvant être activé thermiquement, qui n'est pas activé à la première température, et le composite peut être relié à un substrat à une deuxième température qui est plus élevée que la première température et qui active l'agent de réticulation.

2. Composite selon la revendication 1, **caractérisé par** une première température ≤ 80 °C et une deuxième température > 80 °C.

3. Composite selon la revendication 1 ou 2, **caractérisé en ce que** la matière synthétique thermoplastique du film adhésif est un polyamide ou un polyuréthane non saturé et l'agent de réticulation est un peroxyde avec une température d'activation > 80 °C.

4. Composite selon la revendication 3, **caractérisé en ce que** le film en matière synthétique thermoplastique est un film en polyuréthane, qui obtient après la réticulation des propriétés thermodurcissables.

5. Composite selon l'une quelconque des revendications précédentes, **caractérisé en ce que** le film en matière synthétique présente une épaisseur de 0,01 à 0,07 mm, de préférence de 0,025 à 0,05 mm.

6. Composite selon l'une quelconque des revendications précédentes, **caractérisé en ce que** la strate textile comprend un tissu en taffetas ou un non-tissé en fibres.

7. Composite selon l'une quelconque des revendications précédentes, **caractérisé en ce que** la strate textile contient des fibres de renforcement.

8. Composite selon la revendication 7, **caractérisé en ce que** les fibres de renforcement sont disposées dans deux strates ou plus de filaments parallèles, dans lequel les directions des filaments se croisent.

9. Composite selon l'une quelconque des revendications 1 à 8, **caractérisé par** une couche de recouvrement liée de manière adhésive.

10. Composite selon la revendication 9, **caractérisé en ce que** la couche de recouvrement contient des additifs stabilisateurs.

11. Composite selon l'une quelconque des revendications précédentes, **caractérisé par** un poids surfacique de 20 à 100 g/m², de préférence de 30 à 50 g/m².

12. Composite selon l'une quelconque des revendications précédentes, **caractérisé par** au moins un film de recouvrement retirable.

13. Composite selon l'une quelconque des revendications précédentes en forme de rouleau ou de bande.

14. Utilisation d'un composite selon l'une quelconque des revendications précédentes pour renforcer des films et des structures plates textiles.

15. Utilisation du composite selon l'une quelconque des revendications 1 à 13 pour fabriquer de la toile de voile et des voiles.
